# EUROPÄISCHE PATENTSCHRIFT

(11) **EP 2 171 189 B1**
(45) Veröffentlichungstag und Bekanntmachung des Hinweises auf die Patenterteilung: **25.05.2011**
(21) Anmeldenummer: 08759021.2
(22) Anmeldetag: 04.06.2008
(51) Int. Cl.: E05B 65/19, B60R 21/34

(54) **VERRIEGELUNGSEINRICHTUNG FÜR DIE FRONTKLAPPE EINES KRAFTFAHRZEUGES**
LOCKING DEVICE FOR THE BONNET OF A MOTOR VEHICLE
SYSTÈME DE VERROUILLAGE POUR LE CAPOT AVANT D'UN VÉHICULE AUTOMOBILE

(30) Priorität: 25.07.2007 DE 102007034556
(43) Veröffentlichungstag der Anmeldung: 07.04.2010
(73) Patentinhaber: Audi AG, 85045 Ingolstadt (DE)
(72) Erfinder: ROTH, Franz, 93336 Altmannstein (DE); BAUMHOF, Karsten, 58566 Kierspe (DE); BURGSTAHLER, Oliver, 73433 Aalen (DE); DIX, Norman, 85055 Ingolstadt (DE)
(74) Vertreter: Engelhardt, Harald
(86) Internationale Anmeldenummer: PCT/EP2008/004465
(87) Internationale Veröffentlichungsnummer: WO 2009/012840

(56) Entgegenhaltungen:
- DE-A1- 10 318 796
- DE-A1- 19 721 565
- DE-A1-102006 006 054
- DE-C1- 19 922 455
- JP-A- 60 123 682

## Beschreibung

Die Erfindung bezieht sich auf eine Verriegelungseinrichtung für die Frontklappe eines Kraftfahrzeuges gemäß dem Oberbegriff des Patentanspruchs 1.

Bekannte Verriegelungseinrichtungen für die Frontklappe sind meist mittig angeordnet und weisen ein Fangsystem mit zwei Raststufen auf. Die zweite Raststufe dient dazu, das ungewollte Öffnen der Frontklappe bei Versagen der ersten Raststufe zu verhindern. Die zweite Raststufe kommt auch zum Tragen, wenn die Frontklappe vom Fahrgastraum aus entriegelt wird und die Freigabe der zweiten Raststufe durch eine Wippenbetätigung von außen erfolgt.

Die bekannten Verriegelungsvorrichtungen sind gewöhnlich so ausgeführt, dass ein Verriegelungshaken einen Bolzen oder einen Bügel hintergreift. Bei aktiven Frontklappensystemen, also solchen Systemen, bei denen die Frontklappe zur Verbesserung des Fußgängerschutzes nach hinten bewegt wird, um an der Haubenvorderkante eine Anhebung zu erzielen, müsste der Bolzen oder der Bügel sehr lange ausgeführt werden, damit der Verriegelungshaken stets in Eingriff ist. Eine derartige Lösung lässt sich aufgrund der baulichen Gegebenheiten oft nicht realisieren, da bei der Verschiebung der Frontklappe die Teile der Verriegelungseinrichtung mit relativ hoch angeordneten Motorbauteilen kollidieren würden. Falls die zweite Raststufe in Eingriff kommen sollte, dann entsteht in der verschobenen Position der Frontklappe ein sehr großes Drehmoment im Bereich der Bolzenanbindung.

Aus der DE 10 2006 006 054 A1 ist es bekannt, durch eine geeignete Formgebung und Stellung des Schlossbügels eine Verschiebung der Frontklappe nach hinten und gleichzeitig eine Aufstellung im vorderen Bereich zu erzielen, ohne dass eine zusätzliche Aktuatorik notwendig ist. Für eine oftmals notwendige größere vordere Anhebung der Frontklappe sind längere Verschiebewege erforderlich, die einen zunehmend größeren Schlossbügel erforderlich machen würden.

Bei einer linearen Führung des Schlossbügels, also wenn dieser keine die Aufstellung der Frontklappenvorderkante bewirkende Kontur aufweist, beeinflusst die Führungsrichtung die Neigung des Schlosses, die möglichst exakt der durch die Scharnierdrehachse bestimmten Eindrehrichtung entsprechen sollte.

Der vorliegenden Erfindung liegt deshalb die Aufgabe zugrunde, unter Vermeidung der vorstehend genannten Nachteile die Frontklappe ohne zusätzliche Aktuatorik bei reduziertem Bauraum umzusetzen. Dabei sollen die bewährten und bekannten Verriegelungsbauteile, nämlich ein Verriegelungshaken und ein den Haken aufnehmender Bügel, zum Einsatz kommen.

Die Aufgabe wird dadurch gelöst, dass an der Frontklappe eine Führungseinrichtung angeordnet ist, dass ein Element der aus Verriegelungshaken und Bügel bestehenden Verriegelung mit der Führungseinrichtung in Eingriff steht, und dass bei geschlossener und verriegelter Frontklappe diese über die Führungseinrichtung relativ zu dem Verriegelungshaken und dem Bügel verschiebbar ist. Dadurch können der Bügel bzw. der Verriegelungshaken in herkömmlicher Bauart ausgeführt sein. Sie müssen nur mit einer Gleiteinrichtung versehen werden, damit sie an der an der Frontklappe angeordneten Führungseinrichtung in Längsrichtung verschiebbar sind. Ein großer Vorteil dieser Anordnung besteht darin, dass die Schlossstellung unabhängig von der Verschieberichtung und der Verschiebeposition stets gleich bleibt. Die Winkelstellung zwischen Verriegelungshaken und Bügel werden nicht verändert. Bei der Verschiebung der Frontklappe nach hinten gibt es keine Kollision des Verriegelungshakens oder des Bügels/Bolzens mit dem Motorpackage. Trotz allem lässt sich die Verriegelungseinrichtung in gewohnter Weise betätigen. So ist es ohne weiteres möglich, durch Drücken einer Wippe den Verriegelungshaken aus der zweiten Raststufe heraus zu bewegen. Insgesamt wird ein sehr kompaktes System erreicht, welches mittig und frontklappenfest eingebaut werden kann. Zweckmäßig wird die vorhandene Aktuatorik des aktiven Scharniersystems verwendet, um die Frontklappe auch im Verriegelungsbereich nach hinten zu bewegen.

Die Bewegung der Frontklappe nach hinten kann nicht nur sinnvoll in Verbindung mit einem verbesserten Fußgängerschutz sein, sondern auch dann, wenn bei einem Aufprall auf ein anderes Fahrzeug oder ein feststehendes Hindernis bis zu einer bestimmten Größenordnung die Beschädigung der Frontklappe vermieden werden soll.

Vorteilhaft ist, wenn die an der Frontklappe angeordnete Führungseinrichtung derart ausgebildet und angeordnet ist, dass bei Bewegung der Frontklappe nach hinten die Vorderkante der Frontklappe gleichzeitig angehoben wird. Hier stellt die Führungseinrichtung die Linearführung in der gewünschten Verschieberichtung sicher. Auch hier verhindert die geschlossene Form des Bügels ein Herausrutschen des Verriegelungshakens aus dem Bügel bei Verschiebung der Frontklappe. Gleichzeitig wird erreicht, dass der Schlosswinkel unabhängig von der Verschieberichtung und der Verschiebestellung gewahrt bleibt.

Im normalen Betrieb ist der entlang der Führungseinrichtung verschiebbare Bügel bzw. der verschiebbare Verriegelungshaken durch eine Arretierung gesichert. Diese Arretierung wird selbsttätig gelöst, wenn durch die Aktuatorik die Heckklappe nach hinten verschoben wird. Die Arretierung kann bspw. durch einen Rasthaken realisiert werden. Besonders vorteilhaft ist, wenn ein Federelement vorgesehen ist, welches der Bewegung der Frontklappe entgegenwirkt. Durch die Arretierung und/oder das Federelement ist sichergestellt, dass die Ausgangslage nach einer Auslösung des Systems ohne weiteres wieder herstellbar ist, also keine Teile ausgetauscht werden müssen.

Gemäß einer erfindungsgemäßen Bauform kann der Bügel verschiebbar an der Führungseinrichtung und der Verriegelungshaken ortsfest an einem Karosseriebauteil angeordnet sein. Diese Ausgestaltung bietet sich besonders an, da bei der Entriegelung meist der Verriegelungshaken verschwenkt wird und sich das Betätigungselement, bspw. ein Bowdenzug, leichter an der Karosserie als an der bewegbaren Frontklappe befestigen lässt.

Alternativ ist es natürlich möglich, den Verriegelungshaken verschiebbar an der Führungseinrichtung anzuordnen und den Bügel ortsfest an einem Karosseriebauteil, z.B. am Frontend, zu befestigen.

Schließlich kann der Bügel/der Verriegelungshaken derart an der Führungseinrichtung angeordnet sein, dass beim Schließen der Frontklappe der Bügel/der Verriegelungshaken stets etwa senkrecht auf das korrespondierende Bauteil auftreffen. Dies bedeutet, dass der Bügel/der Verriegelungshaken unter einem Winkel an der Führungseinrichtung verschiebbar befestigt sind, der dem Verschiebewinkel der Frontklappe schräg nach oben hinten entspricht.

Zwei Ausführungsbeispiele der Erfindung sind in der Zeichnung wiedergegeben und werden nachfolgend näher beschrieben. Es zeigen
- Figur 1: den vorderen Teil einer Frontklappe mit einer daran festgelegten Führungseinrichtung für den Bügel einer Verriegelungseinrichtung für die Frontklappe,
- Figur 2: die Anordnung aus Figur 1 bei einer nach hinten verschobenen Frontklappe,
- Figur 3: eine alternative Bauform, bei der der Verriegelungshaken verschiebbar in der Führungseinrichtung an der Frontklappe aufgenommen ist und
- Figur 4: die Anordnung aus Figur 3 bei nach hinten und schräg nach oben verschobener Frontklappe.

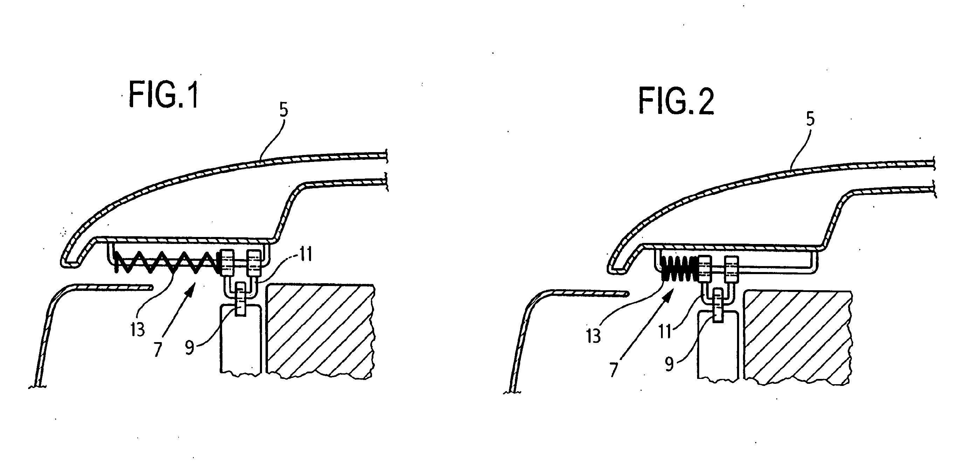

Alle Darstellungen gemäß den Figuren 1 bis 4 zeigen den vorderen Abschnitt einer Frontklappe 5, eine in derem vorderen Endbereich angeordnete Führungseinrichtung 7 und eine Verriegelungseinrichtung, welche als wesentliche Bauteile einen Verriegelungshaken 9 und einen Bügel 11 umfasst. Außerdem sind noch angrenzende, nicht bezeichnete Bauteile, nämlich ein vorderer Karosserieabschluss, ein Teil eines Frontends und das Motorpackage dargestellt.

In den Figuren 1 und 2 ist eine erste Ausführungsform dargestellt, wobei Figur 1 die Ausgangslage, also den normalen Betriebszustand, wiedergibt und Figur 2 die Verhältnisse bei nach hinten verschobener Frontklappe 5 zeigt. Gemäß dieser Ausführungsform ist der Bügel 11 so in der Führungseinrichtung 7 gelagert, dass er von der in Figur 1 gezeigten Stellung in die Stellung gemäß Figur 2 gelangt, wenn die Frontklappe nach hinten verschoben wird. Neben den Reibungskräften in der Führung wirkt dieser Bewegung nur die Kraft einer Druckfeder 13 entgegen. Während des gesamten Verschiebeweges bleibt die Zuordnung zwischen Verriegelungshaken 9 und Bügel 11, abgesehen von kleinen Verschiebebewegungen des Verriegelungshakens 9 im horizontalen Abschnitt des Bügels 11, erhalten.

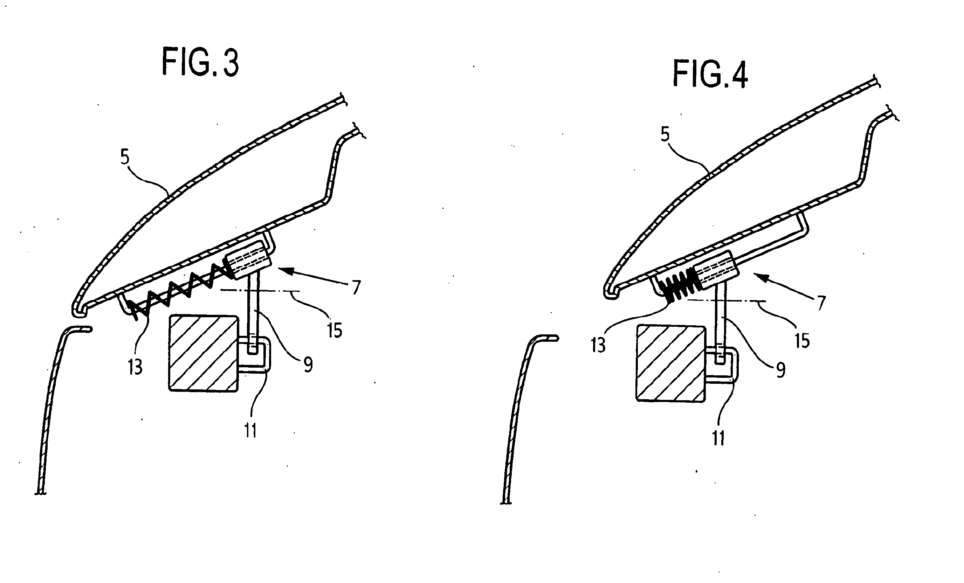

Die in den Figuren 3 und 4 gezeigte Ausführungsform unterscheidet sich von der erstbeschriebenen Ausführungsform dadurch, dass nicht der Bügel 11, sondern der Verriegelungshaken 9 in der Führungseinrichtung 7 verschiebbar ist. Außerdem erfolgt die Verschiebebewegung der Frontklappe 5 nicht nur nach hinten, sondern zusätzlich nach oben. Um trotzdem den Schlosswinkel, also die Zuordnung des Verriegelungshebels 5 zum Bügel 11, konstant zu halten, ist der Verriegelungshaken 9 in einem den Verschiebewinkel der Frontklappe 5 entsprechenden Winkel an der Führungseinrichtung angeordnet. Mit dem Bezugszeichen 15 ist die Schwenkachse des Verriegelungshakens 9 angedeutet.

## Patentansprüche

1. Verriegelungseinrichtung für die Frontklappe eines Kraftfahrzeuges, mit einem Verriegelungshaken, einem den Haken aufnehmenden Bügel, und einer Vorrichtung, durch welche die Vorderkante der Frontklappe zumindest nach hinten verschiebbar ist, **dadurch gekennzeichnet, dass** an der Frontklappe (5) eine Führungseinrichtung (7) angeordnet ist, dass ein Element der aus Verriegelungshaken (9) und Bügel (11) bestehenden Verriegelung mit der Führungseinrichtung (7) in Eingriff steht, und dass bei geschlossener und verriegelter Frontklappe (5) diese über die Führungseinrichtung (7) relativ zu dem Verriegelungshaken (9) und dem Bügel (11) verschiebbar ist.

2. Verriegelungseinrichtung nach Anspruch 1, **dadurch gekennzeichnet, dass** die Führungseinrichtung (7) derart ausgebildet und angeordnet ist, dass bei Bewegung der Frontklappe (5) nach hinten die Vorderkante der Frontklappe (5) gleichzeitig angehoben wird.

3. Verriegelungseinrichtung nach Anspruch 1 oder 2, **dadurch gekennzeichnet, dass** der Bewegung der Frontklappe (5) nach hinten ein Federelement (13) entgegenwirkt.

4. Verriegelungseinrichtung nach einem der Ansprüche 1 bis 3. **dadurch gekennzeichnet, dass** der Bügel (11) verschiebbar an der Führungseinrichtung (7) und der Verriegelungshaken (9) ortsfest an einem Karosseriebauteil angeordnet ist.

5. Verriegelungseinrichtung nach einem der Ansprüche 1 bis 3, **dadurch gekennzeichnet, dass** der Verriegelungshaken (9) verschiebbar an der Führungseinrichtung (7) und der Bügel (11) ortsfest an einem Karosseriebauteil angeordnet ist.

6. Verriegelungseinrichtung nach einem der Ansprüche 1 bis 5, **dadurch gekennzeichnet, dass** der Bügel (11) / der Verriegelungshaken (9) derart an der Führungseinrichtung (7) angeordnet sind, dass diese beim Schließen der Frontklappe (5) stets etwa senkrecht auf das korrespondierende Bauteil auftreffen.

7. Verriegelungseinrichtung nach einem der Ansprüche 1 bis 6, **dadurch gekennzeichnet, dass** der Bügel (11) und der Verriegelungshaken (9) auch nach der Auslösung der Verriegelungseinrichtung in Eingriff bleiben.

## Claims

1. Locking device for the bonnet of a motor vehicle, comprising a locking hook, a clip which receives the hook, and a mechanism by means of which the front edge of the bonnet can be displaced at least towards the rear, **characterised in that** a guide device (7) is arranged on the bonnet (5), **in that** one element of the lock consisting of the locking hook (9) and the clip (11) is in engagement with the guide device (7), and **in that**, in the closed and locked state of the bonnet (5), the latter can be displaced relative to the locking hook (9) and the clip (11) via the guide device (7).

2. Locking device according to claim 1, **characterised in that** the guide device (7) is designed and arranged in such a way that, when the bonnet (5) is moved towards the rear, the front edge of the bonnet (5) is simultaneously raised.

3. Locking device according to claim 1 or 2, **characterised in that** the movement of the bonnet (5) towards the rear works against a spring element (13).

4. Locking device according to one of claims 1 to 3, **characterised in that** the clip (11) is arranged in a displaceable manner on the guide device (7) and the locking hook (9) is arranged in a stationary manner on a body component.

5. Locking device according to one of claims 1 to 3, **characterised in that** the locking hook (9) is arranged in a displaceable manner on the guide device (7) and the clip (11) is arranged in a stationary manner on a body component.

6. Locking device according to one of claims 1 to 5, **characterised in that** the clip (11)/the locking hook (9) are arranged on the guide device (7) in such a way that, as the bonnet (5) is closed, they always meet the corresponding component more or less perpendicularly.

7. Locking device according to one of claims 1 to 6, **characterised in that** the clip (11) and the locking hook (9) remain in engagement even after the locking device is released.

## Revendications

1. Système de verrouillage pour le hayon avant d'un véhicule automobile, comprenant un crochet de verrouillage, un étrier recevant le crochet et un dispositif, par lequel l'arête avant du hayon avant peut coulisser au moins vers l'arrière, **caractérisé en ce qu'**un système de guidage (7) est disposé sur le hayon avant (5), **en ce qu'**un élément du verrouillage comprenant le crochet de verrouillage (9) et l'étrier (11) est en prise avec le système de guidage (7), et **en ce que**, lorsque le hayon avant (5) est fermé et verrouillé, celui-ci peut coulisser au moyen du système de guidage (7) par rapport au crochet de verrouillage (9) et à l'étrier (11).

2. Système de verrouillage selon la revendication 1, **caractérisé en ce que** le système de guidage (7) est conçu et disposé de telle sorte que, lors du déplacement du hayon avant (5) vers l'arrière, l'arête avant du hayon avant (5) est soulevée en même temps.

3. Système de verrouillage selon la revendication 1 ou 2, **caractérisé en ce qu'**un élément à ressort (13) s'oppose au déplacement du hayon avant (5) vers l'arrière.

4. Système de verrouillage selon l'une quelconque des revendications 1 à 3, **caractérisé en ce que** l'étrier (11) est disposé de façon coulissante sur le système de guidage (7) et le crochet de verrouillage (9) de façon fixe sur un composant de carrosserie.

5. Système de verrouillage selon l'une quelconque des revendications 1 à 3, **caractérisé en ce que** le crochet de verrouillage (9) est disposé de façon coulissante sur le système de guidage (7) et l'étrier (11) de façon fixe sur un composant de carrosserie.

6. Système de verrouillage selon l'une quelconque des revendications 1 à 5, **caractérisé en ce que** l'étrier (11) /le crochet de verrouillage (9) sont disposés sur le système de guidage (7) de telle sorte que ceux-ci arrivent toujours à peu près perpendiculairement au composant correspondant lors de la fermeture du hayon avant (5).

7. Système de verrouillage selon l'une quelconque des revendications 1 à 6, **caractérisé en ce que** l'étrier (11) et le crochet de verrouillage (9) restent en prise même après le déclenchement du système de verrouillage.
